Europäisches Patentamt

European Patent Office

Office européen des brevets

(11) Numéro de publication: **0 094 321**
**B1**

(12) **FASCICULE DE BREVET EUROPEEN**

(45) Date de publication du fascicule du brevet: **01.04.87**

(51) Int. Cl.⁴: **H 02 G 3/04, H 02 G 3/06**

(21) Numéro de dépôt: **83400947.4**

(22) Date de dépôt: **10.05.83**

(54) **Dispositif pour l'installation de conduites destinées à loger des câbles électriques.**

(30) Priorité: **11.05.82 ES 512062**

(43) Date de publication de la demande:
**16.11.83 Bulletin 83/46**

(45) Mention de la délivrance du brevet:
**01.04.87 Bulletin 87/14**

(84) Etats contractants désignés:
**AT BE CH DE FR GB IT LI LU NL SE**

(56) Documents cités:
**FR-A-1 262 928**
**FR-A-1 351 262**
**FR-A-2 170 803**
**FR-A-2 406 327**
**FR-A-2 437 720**
**NL-A-8 005 563**
**US-A-3 347 275**

(73) Titulaire: **APARELLAJE ELECTRICO, S.A.**
**Numancia 68**
**Barcelona (ES)**

(72) Inventeur: **Bosch, José Vilanova**
**Rocafort 244**
**Barcelone (ES)**

(74) Mandataire: **Picard, Jean-Claude Georges et al**
**Cabinet Plasseraud 84, rue d'Amsterdam**
**F-75009 Paris (FR)**

Courier Press, Leamington Spa, England.

## Description

La présente invention concerne un dispositif pour l'installation de conduites destinées à loger des câbles électriques, et plus concrètement les conduites du type plateaux autoportants avec une base plane, des parois latérales et un couvercle, dispositif permettant d'obtenir une plus grande rigidité des plateaux autoportants pour câbles, avec une charge uniformément répartie, ces plateaux étant placés sur des supports séparés, ce qui a pour résultat de diminuer les flexions qu'ils subissent aussi bien dans le sens transversal que dans le sens longitudinal.

Par le document FR—A—2 170 803 on connaît un dispositif dans lequel lesdites conduites sont constituées de plateaux à base plane et parois latérales, munis de couvercles, chaque paroi latérale formant, sur sa partie supérieure, une prolongation rentrante parallèle à la base, cette prolongation formant, avec la paroi correspondante, un sillon extérieur qui présente une section angulaire avec son côté supérieur parallèle à la base et son autre côté en position oblique. Ce sillon est prévu pour recevoir un rebord, lui aussi rentrant, du flanc du couvercle du plateau, ledit rebord correspondant à cette section angulaire, la paroi du plateau et le flanc du couvercle se trouvant en position coplanaire.

Le document FR—A—2 406 327 décrit un dispositif dans lequel les mêmes fonctions sont assurées, sous une forme quelque peu différente. En particulier, la prolongation rentrante est tubulaire.

Dans le cas où les conduites en question sont constituées par une succession longitudinale de plateaux contigus, il convient d'assurer une liaison entre ces plateaux.

Les documents FR—A—1 262 928, NL—A—80 05563, FR—A—1 351 262 et FR—A—2 437 720 décrivent des dispositifs de liaison qui soit ne permettent pas une fabrication par extrusion, soit font subir aux éléments d'accouplement (vis, dents ou analogues) des efforts excessifs.

Le but de la présente invention est de remédier à ces inconvénients et d'obtenir en outre un accouplement facile et efficace des plateaux disposés successivement avec un emploi minimal d'accessoires et d'outils, aussi bien avec des alignements au même niveau qu'à des niveaux différents.

A cet effet, un dispositif conforme à l'invention est essentiellement caractérisé en ce que chaque paroi latérale présente une inflexion rentrante oblique à partir de laquelle se trouve la prolongation tubulaire, cette prolongation possédant à sa face inférieure une nervure longitudinale, et en ce que l'accouplement longitudinal entre plateaux contigus est réalisé à l'aide de profilés constitués par une paroi plane pouvant être placée simultanément contre la face interne de la paroi latérale de deux plateaux contigus, et par deux ailettes supérieure et inférieure, l'ailette supérieure formant un arc à trois plans, lesquels s'appliquent respectivement contre l'inflexion rentrante oblique, contre la face inférieure de la prolongation tubulaire et contre la nervure longitudinale, et l'ailette inférieure s'appuyant sur la base des plateaux et ayant des orifices allongés dans le sens longitudinal.

Avantageusement, la fixation de l'ailette inférieure des profilés d'accouplement sur la base des plateaux est réalisée au moyen de vis passant par lesdits orifices allongés dans le sens longitudinal pour ladite ailette et dans le sens transversal pour le plateau.

Des formes de réalisation de l'invention sont exposées en détail dans la description non limitative faite ci-après, en se référant aux dessins ci-joints.

La fig. 1 est une vue en plan d'un tronçon de plateau pour conduites électriques selon l'invention, dans laquelle est représentée une moitié longitudinale munie d'un couvercle.

La fig. 2 est une vue en couple transversale d'un plateau suivant la ligne II—II de la fig. 1.

La fig. 3 est une vue en plan de deux plateaux en accouplement suivant une couple opérée selon la ligne III—III de la fig. 2.

La fig. 4 est une vue en perspective d'un profilé d'accouplement pour l'alignement rectiligne de deux plateaux.

La fig. 5 est une vue en perspective d'un profilé d'accouplement pour l'alignement angulaire de deux plateaux à des niveaux différents.

La fig. 6 est une vue en couple longitudinale d'un profilé d'accouplement angulaire selon la fig. 5, les deux pièces composantes se trouvant alignées.

Le dispositif pour l'installation de canalisations ou conduites destinées à loger des câbles électriques objet de la présente invention est constitué par des plateaux 1 à base plane 2 et parois latérales 3 d'une hauteur relativement réduite, munis d'un couvercle 4.

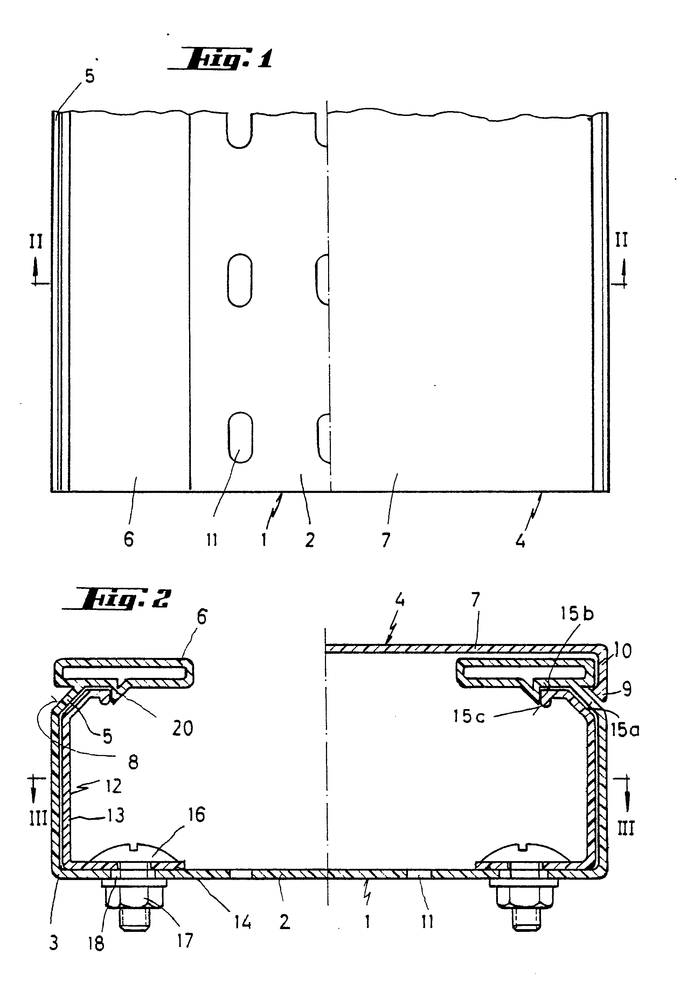

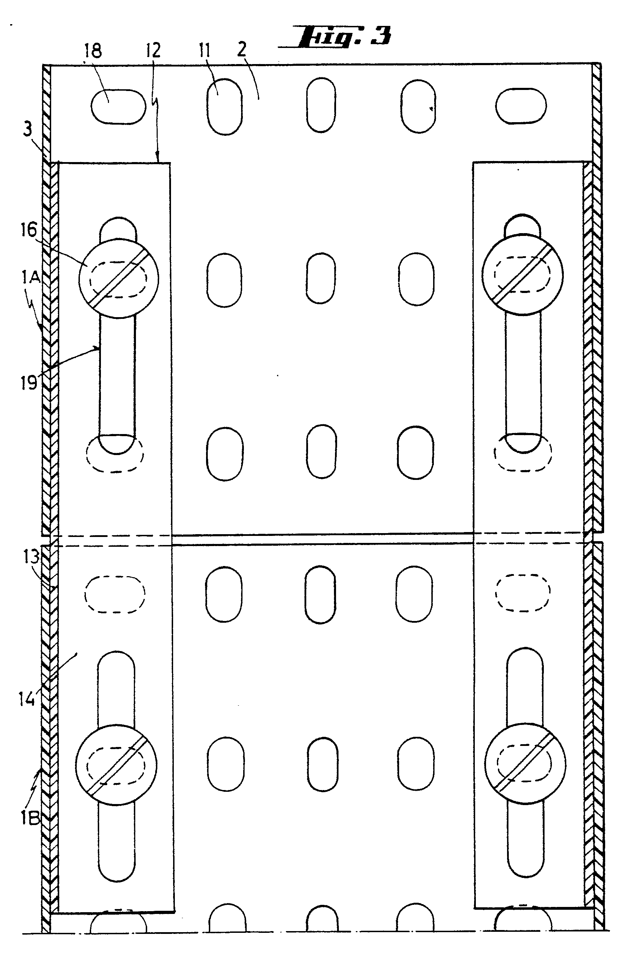

Chacune des parois 3 des plateaux 1 présente, sur sa partie supérieure, à partir d'une inflexion rentrante 5, une prolongation tubulaire plane 6, parallèle à la base 2, qui, tout en conférant une plus grande rigidité au plateau 1, sert d'appui pour la partie 7 dudit couvercle 4. L'inflexion 5 et la prolongation 6 définissent un sillon angulaire 8 prévu pour recevoir un rebord rentrant 9 du flanc 10 du couvercle 4, la section des deux éléments étant complémentaires, ce qui permet d'obtenir, comme on le voit dans la fig. 2, un accouplement efficace. Le montage du couvercle 4 s'effectue par pression grâce à une certaine élasticité des flancs 10 et de la paroi 3 elle-même, les plans du flanc 10 et de la paroi 3 du plateau 1 se trouvant alignés entre eux. Le rebord 9 a une section angulaire correspondant à celle du sillon 8, avec le côté supérieur parallèle à la base et l'autre côté en position oblique.

La base 2 des plateaux présente des orifices 11 permettant le passage de brides pour la fixation des faisceaux de conducteurs logés dans ces plateaux.

Pour l'accouplement longitudinal des plateaux 1, conformément à l'invention, on utilise des pro-

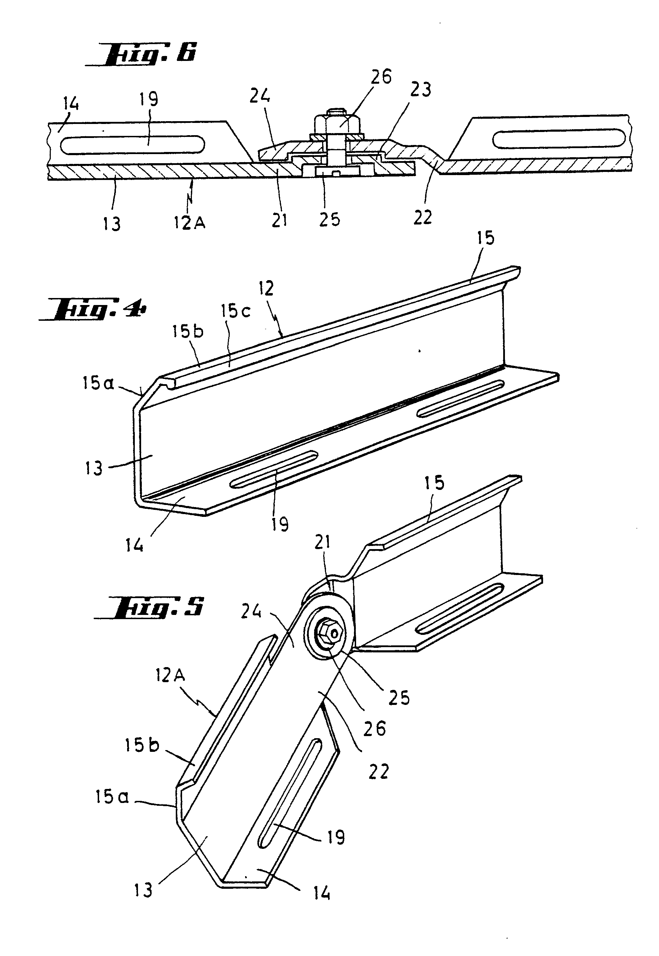

filés 12 (voir fig. 4) présentant une paroi plane 13 à adosser contre la face interne des parois latérales 3 des plateaux, une ailette inférieure 14 à angle droit prévue pour s'appuyer sur la base 2 et une ailette supérieure 15 formant un arc à trois plans 15a, 15b et 15c qui s'applique contre la prolongation 6 desdits plateaux. La fixation des profilés 12 sur la base 2 des plateaux 1 s'effectue au moyen des vis 16 avec écrou 17 passant par les orifices allongés 18 de la base 2, dans le sens transversal, et autres orifices allongés 19 du profilé 12 dans le sens longitudinal, ce qui permet d'obtenir une fixation parfaite pour toute liaison longitudinale plane des deux plateaux.

Ainsi, comme le montre la fig. 3, les deux plateaux 1A et 1B sont accouplés au moyen des profilés 12, avec la particularité que, pour réaliser l'accouplement, il n'est pas nécessaire d'écarter les plateaux pour les enfiler sur les profilés 12, étant donné que ces profilés 12 sont applicables frontalement par simple pression exercée dans le sens transversal, ce qui facilite le montage.

En outre, ledit accouplement, entre plateaux 1 et profilés 12, s'effectue avec application de l'ailette supérieure arquée 15 desdits profilés à une concavité inférieure de la prolongation tubulaire 6 des plateaux, cette prolongation possédant, à cet effet, une nervure longitudinale 20 qui, en même temps, sert à augmenter la rigidité du plateau 1, comme on le voit dans la fig. 2.

Dans le cas de plateaux 1 présentant une liaison angulaire en dièdre entre leurs bases 2, pour former des canalisations avec dénivellations, on utilise des profilés d'accouplement 12A (voir fig. 4 et 5), qui se composent de deux pièces formées comme les profilés 12 déjà mentionnés, avec l'ailette arquée constituée seulement par deux plans 15a et 15b, mais possédant une ailette 21 et 22 respectivement, en prolongement longitudinal de la paroi 13. Ces ailettes forment un emboîtement complémentaire 23 et 24 avec un orifice central par lequel passe une vis 25 avec écrou 26, comme axe de rotation, de sorte que l'effort de l'articulation est développé par les emboîtements 23 et 24.

## Revendications

1. Dispositif pour l'installation de conduites destinées à loger des câbles électriques, ces conduites étant constituées par une succession longitudinale de plateaux (1) à base plane (2) et parois latérales (3), munis de couvercles (4), chaque paroi latérale (3) formant, sur sa partie supérieure, une prolongation rentrante tubulaire (6) parallèle à la base (2), cette prolongation (6) formant, avec la paroi (3) correspondante, un sillon extérieur (8) qui présente une section angulaire avec son côté supérieur parallèle à la base (2) et son autre côté en position oblique, ce sillon (8) étant prévu pour recevoir un rebord (9), lui aussi rentrant, du flanc (10) du couvercle (4) du plateau, ledit rebord correspondant à cette section angulaire, la paroi (3) du plateau et le flanc (10) du couvercle (4) se trouvant en position coplanaire, caractérisé en ce que chaque paroi latérale (3) présente une inflexion rentrante (5) oblique à partir de laquelle se trouve la prolongation tubulaire (6), cette prolongation possédant à sa face inférieure une nervure longitudinale (20), et en ce que l'accouplement longitudinal entre plateaux (1) contigus est réalisé à l'aide de profilés (12, 12A) constitués par une paroi plane (13) pouvant être placée simultanément contre la face interne de la paroi latérale (3) de deux plateaux (1) contigus, et par deux ailettes supérieure (15) et inférieure (14), l'ailette supérieure (15) formant un arc à trois plans (15a, 15b, 15c), lesquels s'appliquent respectivement contre l'inflexion rentrante (5) oblique, contre la face inférieure de la prolongation tubulaire (6) et contre la nervure longitudinale (20), et l'ailette inférieure (14) s'appuyant sur la base (2) des plateaux et ayant des orifices (19) allongés dans le sens longitudinal.

2. Dispositif selon la revendication 1, caractérisé en ce que la fixation de l'ailette inférieure (14) du profilé (12, 12A) d'accouplement à la base (2) du plateau (1) est réalisée à l'aide de vis (16) passant par les orifices allongés (19) dans le sens longitudinal pour ladite ailette et des orifices allongés (18) dans le sens transversal pour le plateau.

## Patentansprüche

1. Vorrichtung zum Verlegen von Rohrsträngen, die zur Aufnahme von elektrischen Kabeln bestimmt sind und aus einer Längsreihe von Rinnenteilen (1) mit ebenem Boden (2) und Seiterwänden (3) bestehen, die mit Deckelteilen (4) versehen sind, wobei jede Seitenwand (3) in ihrem oberen Teil einen parallel zum Boden (2) einspringenden rohrförmigen Fortsatz (6) aufweist, der mit der betreffenden Seitenwand (3) eine äußere Rille (8) mit einem winkeligen Querschnitt bildet, dessen obere Seite parallel zum Boden (2) verläuft und dessen andere Seite eine Schräglage hat, und wobei diese Rille (8) zur Aufnahme einer ebenfalls einspringenden, dem winkeligen Querschnitt entsprechenden Leiste (9) an einem Randflansch (10) des Deckels (4) dient, während die Seitenwand (3) des Rinnenteiles (1) und der Randflansch (10) des Deckelteiles (4) eine komplanare Lage einnehmen, dadurch gekennzeichnet, daß jede Seitenwand (3) eine schräge Einwärtsbiegung (5) aufweist, an welche sich der rohrförmige Fortsatz (6) anschließt, wobei dieser Fortsatz an seiner Unterseite eine Längsrippe (20) hat, und daß die Längskupplung zwischen den aufeinanderfolgenden Rinnenteilen (1) durch Profile (12, 12A) mit je einer ebenen Wand (13), welche an den Innenflächen von Seitenwänden (3) zweier aufeinanderfolgender Rinnenteile (1) anliegt, und mit einem oberen sowie einem unteren Flansch (15 bzw. 14) verwirklicht ist, wobei der obere Flansch (15) eine Wölbung mit drei flachen Abschnitten (15a, 15b, 15c) bildet, welche sich gegen die schräge Einwärtsbiegung (5), gegen die Innenfläche des rohrförmigen Fortsatzes (6) bzw. gegen die Längsrippe (20) legen, während der untere Flansch (14) sich am Boden (2) des Rinnenteiles (1) abstützt und in Längsrichtung verlaufende Langlöcher (19) aufweist.

2. Vorrichtung nach Anspruch 1, dadurch gekennzeichnet, daß zur Befestigung des unteren Flansches (14) des Kupplungsprofiles (12, 12A) am Boden (2) des Rinnenteiles Schrauben (16) vorgesehen sind, welche die in Längsrichtung verlaufenden Langlöcher (19) des betreffenden Flansches und in Querrichtung verlaufende Langlöcher (18) des Rinnenteiles (1) durchsetzen.

**Claims**

1. Installation apparatus for conduits to contain electrical cables, said conduits being formed by a longitudinal series of channel plates (1) with a flat base (2) and side walls (3), provided with cover plates (4), each side wall (3) forming at its upper part a re-entrant tubular extension (6) parallel to the base, said extension (6) forming with the associated wall (3) an external groove (8) which has an angular cross-section with its upper face parallel to the base (2) and its other face at an oblique angle, said groove (8) being adapted to receive a similarly re-entrant flange (9) of a side edge (10) of the cover plate (4) of the plate (1), said flange (9) corresponding to the angular section, the wall (3) of the channel plate and the side edge (10) of the cover plate (4) being coplanar, characterised in that each side wall (3) has an inwardly slanting portion (5) at an oblique angle to the tubular extension (6), said extension having on its inner face a longitudinal rib (20), and in that the coupling between adjacent plates (1) is achieved by means of profiled pieces (12, 12A) formed by a flat wall (13), being placed simultaneously against the internal surfaces of the side walls (3) of two adjacent plates (1) and by upper (15) and lower (14) flanges, the upper flange (15) being formed in an arc having portions formed in three planes (15a, 15b, 15c), which portions press against the inwardly slanting portions (5), against the inner face of the tubular extension (6) and against the longitudinal rib (20) respectively, and the lower flange (14) being supported on the base (2) of the channelling plates and having apertures (19) which are elongate in the longitudinal direction.

2. Apparatus as claimed in claim 1, characterised in that the fixing of the lower flange (14) of the profiled pieces (12, 12A) coupled to the base (2) of the plate (1) is achieved by means of a screw (16) passing through the apertures (19) elongated in the longitudinal direction of the flange, and apertures (18) elongated in the transverse direction of the channel plate.

## Fig. 1

6    11    1    2    7    4

## Fig. 2

# Fig. 3

**Fig. 6**

**Fig. 4**

**Fig. 5**